# FASCICULE DE BREVET EUROPEEN

(11) **EP 2 461 195 B1**
(45) Date de publication et mention de la délivrance du brevet: **24.07.2019**
(21) Numéro de dépôt: 11190834.9
(22) Date de dépôt: 25.11.2011
(51) Int. Cl.: G02B 6/44

(54) **Câble optique de raccordement à un réseau de distribution général comprenant un câble optique interne**
Optisches Verbindungskabel zu einem allgemeinen Verteilungsnetz, das ein inneres optisches Kabel umfasst
Optical cable for connecting to a general distribution network including an internal optical cable

(30) Priorité: 01.12.2010 FR 1059964
(43) Date de publication de la demande: 06.06.2012
(73) Titulaire: Nexans, 92400 Courbevoie (FR)
(72) Inventeur: Elisson, Peter, 50430 Boras (SE); Helvenstein, Réal, B-7022 Harmignes (BE); Cochet, François, 1400 Yverdon Les Bains (CH)
(74) Mandataire: Peguet, Wilfried

(56) Documents cités:
- EP-A1- 1 972 977
- FR-A1- 2 528 220
- GB-A- 2 408 391
- US-A- 6 101 304
- US-A1- 2003 035 635
- S. HORNUNG ET AL.: "the blown fiber cable", IEEE JOURNAL ON SELECTED AREAS IN COMMUNICATIONS, no. 5, 1 août 1986 (1986-08-01), pages 679-685, XP001655859, New York

## Description

La présente invention se rapporte à un câble optique de raccordement à un réseau de distribution général.

L'invention s'applique typiquement, mais non exclusivement, au domaine des câbles optiques destinés à raccorder une pluralité de points d'alimentation audit réseau de distribution général.

Les points d'alimentation peuvent par exemple être localisés chez des abonnés ou dans des boîtes de dérivation destinées à alimenter un réseau de dérivation.

On connaît du document EP-1 972 977 une structure d'un câble optique 100 telle que représentée sur la figure 1.

Le câble optique 100 comprend des modules principaux 1 de fibres optiques, chaque module principal comprenant une gaine externe entourant des fibres optiques.

L'ensemble des modules principaux est entouré par une enveloppe de protection 2, et est disposé autour d'un câble optique interne 3. Ledit câble optique interne 3 comprend une enveloppe de protection 30 entourant des modules internes 31 de fibres optiques 32 et un élément support 33. Au moins un desdits modules internes 31 du câble optique interne 3 est connecté à au moins un desdits modules principaux 1 de fibres optiques, permettant ainsi un « bouclage d'extrémité » pour extraire deux fois une portion différente d'un même module principal lors des opérations de raccordement à des points d'alimentation.

Le câble optique 100 comprend en outre des tubes 13 dans lesquels s'étendent respectivement un module principal 1.

Chacun desdits tubes sont en contact physique direct avec l'enveloppe de protection 2 et le câble optique interne 3.

Lorsqu'une portion du câble optique interne 3 est endommagée, par exemple lorsqu'il y a rupture d'une fibre optique, ou perte d'étanchéité du câble provoquée par exemple par l'endommagement de l'enveloppe de protection, la réparation du câble optique interne s'effectue classiquement en sectionnant la portion endommagée du câble optique interne 3 et en la remplaçant par une nouvelle portion de câble optique. La nouvelle portion de câble optique est ensuite connectée par soudage à ses deux extrémités, au reste du câble optique interne n'ayant pas été endommagé.

Cependant, la nouvelle portion de câble optique interne soudée peut induire une discontinuité et une dégradation de la qualité de transmission optique du câble optique.

Le but de la présente invention est de pallier les inconvénients des techniques de l'art antérieur en proposant notamment un câble optique permettant de remplacer facilement le câble optique interne s'étendant à l'intérieur d'un câble optique comprenant en outre des modules principaux de fibres optiques disposés autour de ce câble optique interne, en évitant toute détérioration des performances optiques du câble optique.

La présente invention a pour objet un câble optique comprenant :
- un ou des modules principaux de fibres optiques comprenant chacun des fibres optiques disposées à l'intérieur d'une gaine externe (i.e. les fibres optiques de chaque module principal étant entourées par ladite gaine externe),
- une enveloppe de protection entourant le ou lesdits modules principaux de fibres optiques, et
- un câble optique interne disposé à l'intérieur de ladite enveloppe de protection, ledit câble optique interne comprenant une enveloppe de protection entourant un ou des modules internes de fibres optiques, chaque module interne comprenant des fibres optiques entourées par une gaine externe, au moins un module interne de fibres optiques du câble optique interne étant connecté à au moins un des modules principaux de fibres optiques du câble optique,
caractérisé en ce que le câble optique interne s'étendant à l'intérieur d'un tube qui lui est propre, ledit câble optique interne ayant un jeu suffisant à l'intérieur dudit tube pour pouvoir être extrait dudit tube, et le ou les modules principaux étant disposés autour dudit tube.

On entend par module principal tout module de fibres optiques pouvant être extrait du câble optique sur de grandes longueurs, par exemple jusqu'à une centaine de mètres, à des fins de raccordement à des points d'alimentation localisés par exemples chez des abonnés ou dans des boîtes de dérivation destinées à alimenter un réseau de dérivation.

Grâce à l'invention, il n'est plus nécessaire ni de sectionner le câble optique interne, ni de connecter par soudage la nouvelle portion de câble interne remplaçant la portion endommagée. En effet, pour réparer la portion du câble interne endommagée, il suffit simplement d'extraire la totalité du câble optique interne, incluant cette portion endommagée. Ceci est rendu possible par le fait que le câble optique interne se trouve à l'intérieur du tube qui lui est propre. Le jeu suffisant, disponible à l'intérieur du tube, permet au câble optique interne de pouvoir être facilement extrait en totalité par des techniques bien connues de l'homme du métier comme par exemple par un procédé de soufflage. Une fois le câble optique interne extrait de son tube, un nouveau câble optique interne peut être inséré dans ledit tube à la place du câble existant endommagé, et connecté à ses extrémités par des moyens de connexion classiques tels que par soudage ou par un connecteur mécanique.

De préférence, l'aire de la section extérieure du câble optique interne est inférieure à 80% de l'aire de la section intérieure du tube.

Dans un mode de réalisation particulier, le câble optique de l'invention comprend au moins un tube tel que n modules principaux de fibres optiques sont disposés à l'intérieur dudit tube qui leur est propre, lesdits n modules principaux étant libres à l'intérieur dudit tube, n étant un nombre entier supérieur ou égal à 1. De préférence, n est un entier tel que 1 ≤ n ≤ 3. Ce mode de réalisation est décrit dans le document EP-1 972 977.

De préférence, lesdits tubes dans lesquels sont disposés les modules principaux ont un diamètre intérieur strictement inférieur au diamètre intérieur du tube propre au câble optique interne.

Afin de faciliter l'installation et la connexion des différents modules principaux, chacun desdits modules principaux et/ou chacun desdits tubes dans lesquels sont disposés les modules principaux est notamment immobilisé entre le tube propre au câble optique interne et l'enveloppe de protection.

Dans un mode de réalisation particulier, le tube propre au câble optique interne est disposé au centre du câble optique. Cette position centrale améliore la compacité du câble optique et facilite l'organisation des modules principaux autour du tube propre au câble optique interne.

Dans un mode de réalisation particulièrement préféré,
- le ou les modules principaux de fibres optiques, et/ou
- le ou les tubes dans lesquels sont disposés le ou les modules principaux, lorsque ces tubes existent,
peuvent être enroulés autour du tube propre au câble optique interne, notamment lorsque ledit tube est disposé an centre du câble optique.

De préférence,
- le ou les modules principaux de fibres optiques, et/ou
- le ou les tubes dans lesquels sont disposés le ou les modules principaux, lorsque ces tubes existent,
peuvent être torsadés hélicoïdalement ou en SZ, autour du tube propre au câble optique interne, notamment lorsque ledit tube est disposé an centre du câble optique.

Ainsi, dans cette configuration, le câble optique de l'invention présente une flexibilité améliorée significativement du fait de la répartition homogène des forces mécaniques le long du câble optique.

Dans un mode de réalisation particulier, le nombre total de fibres optiques contenu dans le câble optique interne est strictement supérieur au nombre total de fibres optiques contenu dans au moins un des modules principaux de fibres optiques. L'avantage de ce mode de réalisation est de pouvoir ré-alimenter au minimum une fois la totalité des fibres optiques contenues dans au moins un des modules principaux de fibres optiques.

De préférence, le nombre total de fibres optiques contenu dans le câble optique interne est environ égal au nombre total de fibres optiques contenu dans l'ensemble des modules principaux de fibres optiques.

On entend par « module interne de fibres optiques » un module principal de fibres optiques tel que défini dans la présente invention. En d'autres termes, un module interne de fibres optiques comprend des fibres optiques et une gaine externe, les fibres optiques de chaque module interne étant entourées par ladite gaine externe.

Les modules principaux comme les modules internes peuvent comprendre de 1 à 24 fibres optiques, dont le diamètre est par exemple de 250 µm. Leur gaine externe peut être une gaine externe polymérique non nécessairement serrée autour des fibres optiques pour pouvoir être facilement enlevée.

Les modules principaux, comme les modules internes, peuvent être renforcés mécaniquement pour faciliter leur extraction. Ce renforcement peut être réalisé par l'ajout d'un élément de renforcement à l'intérieur de la gaine externe. A titre d'exemple, on peut citer l'ajout d'un élément allongé s'étendant le long des fibres optiques du type fibres d'aramide.

Le câble optique interne peut être considéré comme un élément porteur, qui permet en outre le renforcement du câble optique selon la présente invention. Le tube propre au câble optique interne améliore également le renforcement du câble optique.

Le câble optique interne peut être classiquement connecté à au moins un des modules principaux de fibres optiques qui entoure le tube propre au câble optique interne.

L'extrémité du câble optique interne peut ainsi être connectée aux modules principaux de fibres optiques par un moyen de connexion, permettant ainsi un « bouclage d'extrémité » pour extraire deux fois une portion différente d'un même module principal lors des opérations de raccordement à des points d'alimentation.

A une extrémité du câble, les fibres optiques des modules internes du câble interne peuvent ainsi être avantageusement connectées aux fibres optiques des modules principaux du câble optique pour assurer la continuité de la transmission optique dans ledit câble optique. En d'autres termes, ceci constitue un bouclage d'extrémité.

A titre d'exemple, le moyen de connexion entre les modules principaux et internes peut s'effectuer par soudage ou par un connecteur mécanique.

Que ce soit le tube propre au câble optique interne ou les tubes propres aux modules principaux de fibres optiques, ils peuvent être obtenus par exemple à partir d'un matériau à base de polybutylène téréphthalate (PBT) et/ou de polycarbonate (PC).

La gaine externe du module principal ou du module interne est classiquement composée d'un matériau polymère chargé pour pouvoir être déchirable facilement. Le polymère peut être par exemple une polyoléfine, notamment un polymère et/ou copolymère d'éthylène, ou un polyester.

L'enveloppe de protection peut comprendre au moins une couche en un matériau du type polyoléfine, polyester ou polyamide.

Selon une variante, l'enveloppe de protection peut comprendre une couche externe et une couche interne. Par exemple, la couche externe se compose d'un polyéthylène haute densité et la couche interne se compose de mèches de maintien, lesdites mèches de maintien pouvant être du type polyester ou aramide. En outre, une couche intermédiaire de type armure, par exemple en acier corrugué, peut être intercalée entre la couche externe et la couche interne.

Typiquement, il est préférable que les différentes couches constitutives de l'enveloppe de protection soient facilement sectionnables pour pouvoir accéder aux différents tubes constitutifs du câble optique.

Un autre objet selon l'invention concerne un procédé de réparation d'un câble interne constitutif d'un câble optique tel que défini dans la revendication 8.

L'étape d'extraire au moins une partie du câble interne, et de préférence d'extraire la totalité du câble interne, peut être effectuée par exemple par soufflage ou par poussage. Lors de l'extraction, le tube propre au câble optique interne reste intègre sur toute sa longueur.

De préférence, l'extraction du câble optique interne est effectuée par injection d'un flux d'air dans le tube.

Dans un mode de réalisation particulièrement avantageux, l'extraction dudit module principal du tube qui lui est propre est effectuée par injection d'un flux d'air à partir de la première zone de section du tube.

Le procédé de réparation selon l'invention peut comprend en outre, après l'étape d'extraction mentionnée ci-avant, l'étape d'installer en partie ou en totalité un autre câble interne, respectivement à la place de la partie ou de la totalité du câble interne extrait.

D'autres caractéristiques et avantages de la présente invention apparaîtront à la lumière de la description d'exemples non limitatifs d'un câble optique selon la présente invention faits en référence aux figures annotées, dans lesquelles :
- la figure 1 représente de manière schématique une structure d'un câble optique en coupe transversale conforme à l'art antérieur ;
- la figure 2 représente de manière schématique une structure d'un câble optique en coupe transversale conforme à la présente invention ; et
- la figure 3 représente de manière schématique une autre structure d'un câble optique en coupe transversale conforme à la présente invention.

Pour des raisons de clarté, les mêmes éléments ont été désignés par des références identiques. De même, seuls les éléments essentiels pour la compréhension de l'invention ont été représentés de manière schématique, et ceci sans respect de l'échelle.

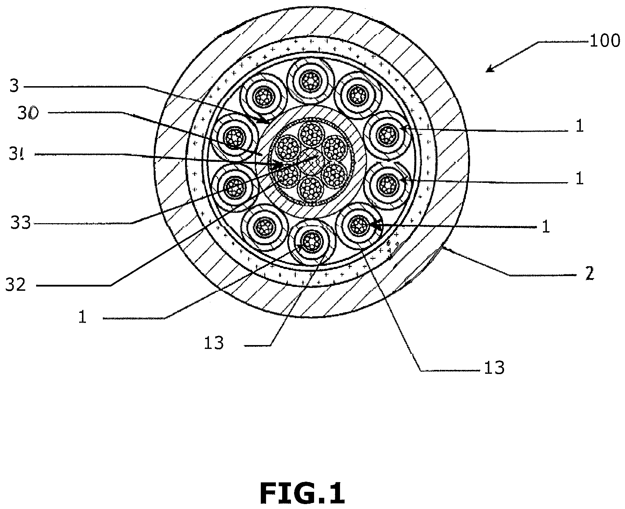

La figure 1 a déjà été décrite précédemment, et pour faciliter la compréhension, les éléments communs entre la présente invention et l'art antérieur portent les mêmes références.

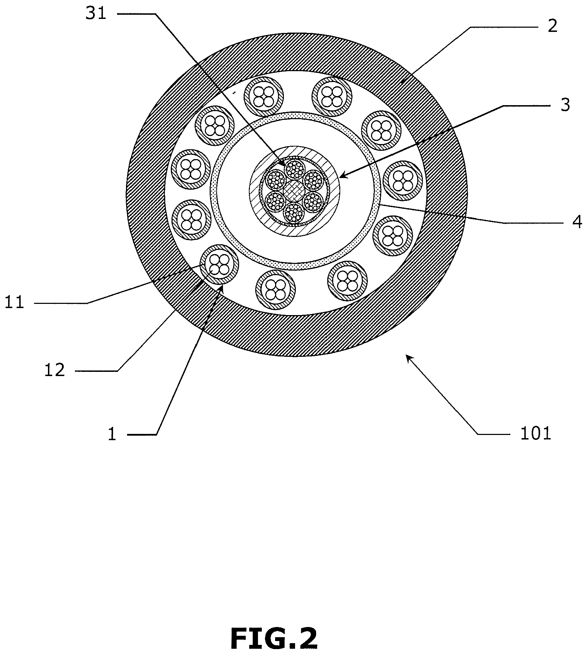

La figure 2 représente la vue en coupe d'un câble optique 101 selon un mode de réalisation particulier conforme à la présente invention.

Le câble optique 101 comprend des modules principaux de fibres optiques 1, une enveloppe de protection 2 entourant l'ensemble de ces modules principaux, et un câble optique interne 3 s'étendant à l'intérieur d'un tube 4 qui lui est propre.

Plus particulièrement, ce câble optique interne 3 comprend une enveloppe de protection entourant des modules internes 31 de fibres optiques tels que défini dans la présente invention, et un élément de renforcement central.

Le câble optique interne 3 n'est pas nécessairement utilisé pour la distribution d'informations à des points d'alimentations, ou en d'autres termes n'est pas nécessairement utilisé pour être extrait sur de grandes longueurs à des fins de raccordement auxdits points.

Au moins un module interne 31 de fibres optiques du câble optique interne 3 est connecté à au moins un des modules principaux 1 de fibres optiques du câble optique 101, afin de former un bouclage d'extrémité.

Le câble optique interne 3, disposé à l'intérieur du tube 4, est libre à l'intérieur dudit tube. Il peut ainsi glisser à l'intérieur du tube qui lui est propre et être facilement extrait dudit tube puisque le câble optique interne est agencé dans la cavité du tube avec un jeu suffisant.

Pour exemple, le diamètre externe du câble optique interne 3 est d'environ 4 à 8 mm et le diamètre interne du tube 4 propre au câble optique interne est d'environ 6 à 10 mm, l'aire de la section extérieure du câble optique interne étant ainsi inférieure à 80% de l'aire de la section intérieure dudit tube.

Le tube 4 propre au câble optique interne se trouve en position centrale dans le câble optique 101. Cette position centrale améliore la compacité du câble optique et facilite l'organisation des modules principaux autour dudit tube. Ainsi, le tube 4 permet d'organiser à sa périphérie les différents modules principaux de fibres optiques.

Les modules principaux 1 de fibres optiques sont disposés autour du tube 4 propre au câble optique interne. Chaque module principal est en contact physique avec la surface extérieure du tube 4 et avec la surface intérieure de l'enveloppe de protection 2.

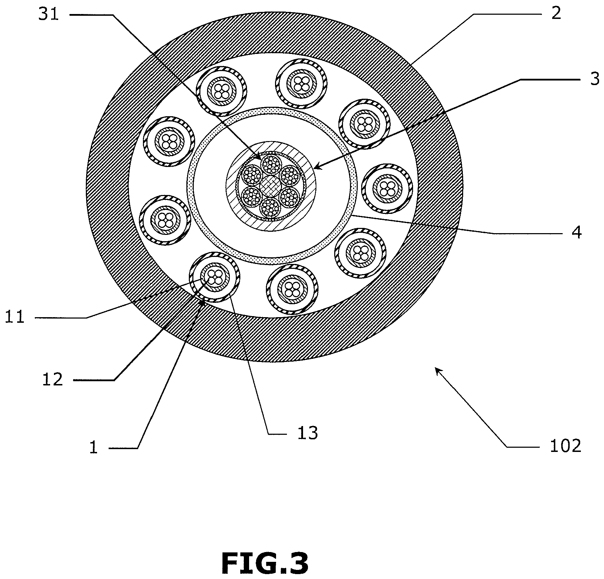

La figure 3 représente la vue en coupe d'un câble optique 102 selon un autre mode de réalisation particulier conforme à la présente invention.

La seule différence entre le mode de réalisation de la figure 2 et le mode de réalisation de la figure 3 concerne l'agencement des modules principaux 1 de fibres optiques.

Chaque module principal 1 s'étend à l'intérieur d'un tube 13 qui lui est propre, et est agencé à l'intérieur dudit tube de manière à ce qu'il dispose d'un jeu suffisant destiné à faciliter son extraction, notamment par soufflage.

Les différents tubes 13 sont maintenus entre l'enveloppe de protection 2 et le tube 4 propre au câble optique interne.

Bien entendu, tous les modules principaux ou tous les tubes propres aux modules principaux ne sont pas nécessairement en contact physique d'une part avec la surface extérieure du tube propre au câble interne, et d'autre part avec la surface intérieure de l'enveloppe de protection 2. Ils peuvent être en effet soit en contact avec le tube 4 propre au câble optique interne, soit en contact avec l'enveloppe de protection 2. Il est notamment avantageux qu'ils soient intercalés entre la couche de protection 2 et le tube 4 propre au câble optique interne afin de les immobiliser.

Le nombre de modules principaux et/ou internes ainsi que le nombre de fibres optiques représentés sur les figures 2 et 3 ne sont bien entendu nullement limitatifs. En outre, on pourrait également envisager de disposer plus d'un câble optique interne à l'intérieur du tube propre au câble optique interne.

## Revendications

1. Câble optique (101, 102) comprenant :
- un ou des modules principaux (1) de fibres optiques comprenant chacun des fibres optiques (12) disposées à l'intérieur d'une gaine externe (11),
- une enveloppe de protection (2) entourant le ou lesdits modules principaux (1) de fibres optiques, et
- un câble optique interne (3) disposé à l'intérieur de ladite enveloppe de protection (2), ledit câble optique interne comprenant une enveloppe de protection entourant un ou des modules internes (31) de fibres optiques, chaque module interne comprenant des fibres optiques entourées par une gaine externe, et au moins un module interne (31) de fibres optiques du câble optique interne (3) étant connecté à au moins un des modules principaux (1) de fibres optiques du câble optique,
**caractérisé en ce que** le câble optique interne (3) s'étend à l'intérieur d'un tube (4) qui lui est propre, ledit câble optique interne (3) ayant un jeu suffisant à l'intérieur dudit tube (4) pour pouvoir être extrait dudit tube (4), le ou les modules principaux étant disposés autour dudit tube (4).

2. Câble selon la revendication 1, **caractérisé en ce que** l'aire de la section extérieure du câble optique interne (3) est inférieure à 80% de l'aire de la section intérieure du tube (4).

3. Câble selon l'une quelconque des revendications précédentes, **caractérisé en ce que** le câble optique interne (3) est extrait par un procédé de soufflage.

4. Câble selon l'une quelconque des revendications précédentes, **caractérisé en ce qu'**il comprend en outre au moins un tube (13) tel que n modules principaux (1) de fibres optiques sont disposés à l'intérieur de ce tube (13) qui leur est propre, lesdits n modules principaux étant libres à l'intérieur dudit tube (13), avec n un nombre entier supérieure ou égal à 1.

5. Câble selon l'une quelconque des revendications précédentes, **caractérisé en ce que** chacun desdits modules principaux (1) et/ou desdits tubes (13) est immobilisé entre le tube (4) et l'enveloppe de protection (2).

6. Câble selon l'une quelconque des revendications précédentes, **caractérisé en ce que** le ou les modules principaux de fibres optiques sont enroulés autour du tube propre au câble optique interne.

7. Câble selon l'une quelconque des revendications précédentes, **caractérisé en ce que** le nombre total de fibres optiques contenu dans le câble optique interne est strictement supérieur au nombre total de fibres optiques contenu dans au moins un des modules principaux de fibres optiques.

8. Procédé de réparation d'un câble optique interne (3) constitutif d'un câble optique (101, 102) comprenant :
- un ou des modules principaux (1) de fibres optiques comprenant chacun des fibres optiques (12) disposées à l'intérieur d'une gaine externe (11),
- une enveloppe de protection (2) entourant le ou lesdits modules principaux (1) de fibres optiques, et
- un câble optique interne (3) disposé à l'intérieur de ladite enveloppe de protection (2), ledit câble optique interne comprenant une enveloppe de protection entourant un ou des modules internes (31) de fibres optiques, chaque module interne comprenant des fibres optiques entourées par une gaine externe,
le câble optique interne (3) s'étendant à l'intérieur d'un tube (4) qui lui est propre, ledit câble optique interne (3) ayant un jeu suffisant à l'intérieur dudit tube (4) pour pouvoir être extrait dudit tube (4), le ou les modules principaux étant disposés autour dudit tube (4),
le procédé de réparation comprenant l'étape d'extraire au moins une partie du câble optique interne (3), et de préférence d'extraire la totalité du câble optique interne.

9. Procédé selon la revendication 8, **caractérisé en ce que** l'extraction du câble optique interne (3) est effectuée par injection d'un flux d'air dans le tube (4).

10. Procédé selon la revendication 8 ou 9, **caractérisé en ce qu'**il comprend en outre, après l'étape d'extraction, l'étape d'installer en partie ou en totalité un autre câble interne, respectivement à la place de la partie ou de la totalité du câble interne extrait.

## Patentansprüche

1. Optisches Kabel (101, 102), umfassend:
- ein oder mehrere Hauptmodule (1) von optischen Fasern, umfassend jeweils optische Fasern (12), die im Inneren einer äußeren Hülle (11) angeordnet sind,
- eine Schutzumhüllung (2), die das oder die Hauptmodule (1) von optischen Fasern umgibt, und
- ein inneres optisches Kabel (3), das im Inneren der Schutzumhüllung (2) angebracht ist, wobei das innere optische Kabel eine Schutzumhüllung umfasst, die eines oder mehrere innere Module (31) von optischen Fasern umgibt, wobei jedes innere Modul optische Fasern umfasst, die von einer äußeren Hülle umgeben sind, und wobei mindestens ein inneres Modul (31) von optischen Fasern des inneren optischen Kabels (3), mit mindestens einem der Hauptmodule (1) von optischen Fasern des optischen Kabels verbunden ist,
**dadurch gekennzeichnet, dass** sich das innere optische Kabel (3) in das Innere des ihm eigenen Rohrs (4) erstreckt, wobei das innere optische Kabel (3) ein ausreichendes Spiel im Inneren des Rohrs (4) aufweist, um aus dem Rohr (4) herausgenommen werden zu können, wobei das oder die Hauptmodule um das Rohr (4) angeordnet sind.

2. Kabel nach Anspruch 1, **dadurch gekennzeichnet, dass** der Bereich des äußeren Schnitts des inneren optischen Kabels (3) kleiner als 80 % des Bereichs des inneren Schnitts des Rohrs (4) ist.

3. Kabel nach einem der vorhergehenden Ansprüche, **dadurch gekennzeichnet, dass** das innere optische Kabel (3), durch ein Blasverfahren herausgenommen wird.

4. Kabel nach einem der vorhergehenden Ansprüche, **dadurch gekennzeichnet, dass** es außerdem mindestens ein Rohr (13) umfasst, so dass n Hauptmodule (1) von optischen Fasern in Inneren dieses ihnen eigenen Rohrs (13) angeordnet sind, wobei die n Hauptmodule im inneren des Rohrs (13) frei sind, wobei n eine ganze Zahl größer als oder gleich 1 ist.

5. Kabel nach einem der vorhergehenden Ansprüche, **dadurch gekennzeichnet, dass** jedes der Hauptmodule (1) und/oder der Rohre (13) zwischen dem Rohr (4) und der Schutzumhüllung (2) blockiert ist.

6. Kabel nach einem der vorhergehenden Ansprüche, **dadurch gekennzeichnet, dass** das oder die Hauptmodule von optischen Fasern um das dem inneren optischen Kabel eigene Rohr gewickelt sind.

7. Kabel nach einem der vorhergehenden Ansprüche, **dadurch gekennzeichnet, dass** die Gesamtzahl von optischen Fasern, die im inneren optischen Kabel enthalten ist, strikt größer als die Gesamtzahl von optischen Fasern ist, die in mindestens einem der Hauptmodule von optischen Fasern enthalten ist.

8. Verfahren zur Reparatur eines inneren optischen Kabels (3), aus dem ein optisches Kabel (101, 102) besteht, umfassend:
- eines oder mehrere Hauptmodule (1) von optischen Fasern, umfassend jeweils optische Fasern (12), die im Inneren einer äußeren Hülle (11) angeordnet sind,
- eine Schutzumhüllung (2), die das oder die Hauptmodule (1) von optischen Fasern umgibt, und
- ein inneres optisches Kabel (3), das im Inneren der Schutzumhüllung (2) angebracht ist, wobei das innere optische Kabel eine Schutzumhüllung umfasst, die eines oder mehrere innere Module (31) von optischen Fasern umgibt, wobei jedes innere Modul optische Fasern umfasst, die von einer äußeren Hülle umgeben sind,
wobei sich das innere optische Kabel (3) in das Innere eines ihm eigenen Rohrs (4) erstreckt, wobei das innere optische Kabel (3) ein ausreichendes Spiel im Inneren des Rohrs (4) aufweist, um aus dem Rohr (4) herausgenommen werden zu können, wobei das oder die Hauptmodule um das Rohr (4) angeordnet sind,
wobei das Verfahren zur Reparatur den Schritt des Herausnehmens mindestens eines Teils des inneren optischen Kabels (3) und vorzugsweise des Herausnehmens der Gesamtheit des inneren optischen Kabels umfasst.

9. Verfahren nach Anspruch 8, **dadurch gekennzeichnet, dass** das Herausnehmen des inneren optischen Kabels (3) durch Injektion eines Luftflusses in das Rohr (4) erfolgt.

10. Verfahren nach Anspruch 8 oder 9, **dadurch gekennzeichnet, dass** es außerdem, nach dem Schritt des Herausnehmens, den Schritt des Installierens eines Teil oder der Gesamtheit eines anderen inneren Kabels jeweils anstelle des Teils oder der Gesamtheit des herausgenommenen inneren Kabels umfasst.

## Claims

1. An optical cable (101, 102) comprising:
- one or more main fiber optic modules (1) each comprising optical fibers (12) arranged inside an outer sheath (11),
- a protective enclosure (2) surrounding said main fiber optic module(s) (1), and
- an inner optical cable (3) arranged inside said protective enclosure (2), said inner optical cable comprising a protective enclosure surrounding one or more inner fiber optic modules (31), each inner module comprising optical fibers surrounded by an outer sheath, and at least one inner fiber optic module (31) of the inner optical cable (3) being connected to at least one of the main fiber optic modules (1) of the optical cable,
**characterized in that** the inner optical cable (3) extends inside a tube (4) that is specific to it, said inner optical cable (3) having sufficient play inside said tube (4) to be able to be removed from said tube (4), the main module(s) being arranged around said tube (4).

2. The cable according to claim 1, **characterized in that** the area of the outer section of the inner optical cable (3) is smaller than 80% of the area of the inner section of the tube (4).

3. The cable according to any one of the preceding claims, **characterized in that** the inner optical cable (3) is removed by a blowing method.

4. The cable according to any one of the preceding claims, **characterized in that** it further comprises at least one tube (13) such that n main fiber optic modules (1) are arranged inside this tube (13) that is specific to them, said n main modules being free inside said tube (13), with n being an integer greater than or equal to 1.

5. The cable according to any one of the preceding claims, **characterized in that** each of said main modules (1) and/or said tubes (13) is immobilized between the tube (4) and the protective enclosure (2).

6. The cable according to any one of the preceding claims, **characterized in that** the main fiber optic module(s) are wound around the tube specific to the inner optical cable.

7. The cable according to any one of the preceding claims, **characterized in that** the total number of optical fibers contained in the inner optical cable is strictly greater than the total number of optical fibers contained in at least one of the main fiber optic modules.

8. A method for repairing an inner optical cable (3) making up an optical cable (101, 102) comprising:
- one or more main fiber optic modules (1) each comprising optical fibers (12) arranged inside an outer sheath (11),
- a protective enclosure (2) surrounding said main fiber optic module(s) (1), and
- an inner optical cable (3) arranged inside said protective enclosure (2), said inner optical cable comprising a protective enclosure surrounding one or several inner fiber optic modules (31), each inner module comprising optical fibers surrounded by an outer sheath,
the inner optical cable (3) extending inside a tube (4) that is specific to it, said inner optical cable (3) having sufficient play inside said tube (4) to be able to be removed from said tube (4), the main module(s) being arranged around said tube (4),
the repair method comprising the step of removing at least part of the inner optical cable (3), and preferably removing all of the inner optical cable.

9. The method according to claim 8, **characterized in that** the removal of the inner optical cable (3) is done by injecting an air flow into the tube (4).

10. The method according to claim 8 or 9, **characterized in that** it further comprises, after the removal step, the step of installing part or all of another inner cable, respectively in place of part or all of the removed inner cable.
